Europäisches Patentamt

European Patent Office

Office européen des brevets

(11) Numéro de publication: **0 187 099**
A1

# (12) DEMANDE DE BREVET EUROPEEN

(21) Numéro de dépôt: 85402551.7

(22) Date de dépôt: **19.12.85**

(51) Int. Cl.⁴: **F 02 F 1/42,** F 01 L 1/26

(30) Priorité: **21.12.84 FR 8419619**

(43) Date de publication de la demande: **09.07.86**
**Bulletin 86/28**

(84) Etats contractants désignés: **AT DE GB IT SE**

(71) Demandeur: **REGIE NATIONALE DES USINES RENAULT, Boîte postale 103 8-10 avenue Emile Zola, F-92109 Boulogne-Billancourt (FR)**

(72) Inventeur: **Deleplace, Christian, 54, rue Eugène Labiche Bât I - Esc D 3ème, F-92500 Rueil Malmaison (FR)**

(54) **Culasse de moteur à combustion interne.**

(57) Culasse à trois soupapes par cylindre, actionnés par des linguets commandés par un seul arbre à cames. Suivant l'invention, elle est caractérisée en ce que:

— la soupape d'échappement (4) est centrée sur le plan axial (12) du cylindre qui est perpendiculaire au plan longitudinal (10) de la rangée de cylindres du moteur, et désigné plan transversal, et les deux soupapes d'admission (2, 2') sont centrées sur un plan (14) parallèle à ce plan longitudinal, symétriquement à ce plan transversal;

— le linguet d'échappement (8) est centré sur le plan transversal (12), et les deux liguets d'admission (6, 6') sont respectivement centrés sur deux plans sécants (16, 18) symétriques par rapport à ce plan transversal, et passant par les axes des soupapes d'admission respectives.

*Application:* notamment à l'amélioration de la fiabilité de moteurs tous types et de grande diffusion, de leurs performances et de leur fabrication.

# CULASSE DE MOTEUR A COMBUSTION INTERNE

La présente invention se rapporte à une culasse de moteur à combustion interne particulièrement bien adaptée aux moteurs tous types de grande diffusion.

Elle a pour but de proposer une architecture particulière de culasse qui soit polyvalente, c'est-à-dire qui ne nécessite que des modifications mineures pour passer d'un procédé de combustion à un autre (moteurs à allumage commandé, à allumage par compression et injection directe, et à allumage par compression et injection indirecte).

A cet effet, elle a pour objet une culasse du type recevant deux soupapes d'admission et une soupape d'échappement par cylindre, actionnés par des linguets respectifs montés sur rotules.

Suivant une particularité de l'invention, la soupape d'échappement est centrée sur le plan axial du cylindre qui est perpendiculaire au plan longitudinal du moteur, et désigné plan transversal, et les deux soupapes d'admission sont centrées sur un plan parallèle à ce plan longitudinal, symétriquement à ce plan transversal.

Suivant une autre particularité de l'invention, le linguet d'échappement est centré sur le plan transversal, et les deux linguets d'admission sont respectivement centrés sur deux plans sécants, symétriques par rapport à ce plan transversal, et passant par les axes des soupapes d'admission respectives.

Suivant une autre particularité de l'invention, les trois soupapes sont commandées par un arbre à cames unique, disposé parallèlement au plan longitudinal du moteur, au-dessus des linguets qu'il actionne.

Suivant une autre particularité de l'invention, les soupapes d'admission de deux cylindres contigus sont alimentés par un conduit en fourche dont la branche commune est centrée sur un plan inter-cylindres, chaque soupape d'admission extrême par un conduit unitaire en forme de demi-fourche, et chaque soupape d'échappement

- 2 -

0187099

par un conduit centré sur le plan transversal du cylindre correspondant.

D'autres caractéristiques apparaîtront plus clairement à la lecture de la description qui suit de trois modes de réalisation de l'invention donnés à titre d'exemples non limitatifs avec leurs avantages respectifs, et en référence aux dessins annexés dans lesquels :

- la figure 1 est une vue partielle de dessous d'une culasse conforme à l'invention avec demi-vue en coupe suivant un plan parallèle au plan de joint du moteur ;

- la figure 2 est une vue partielle en coupe transversale d'une culasse d'un moteur à allumage commandé, conforme à l'invention ;

- la figure 3 est une vue partielle et schématique de la culasse illustrée à la figure 2, en coupe suivant le plan 3-3 ;

- la figure 4 est une vue partielle en coupe transversale d'une culasse d'un moteur à allumage par compression et injection indirecte, conforme à l'invention ;

- la figure 5 est une vue partielle et schématique de la culasse illustrée à la figure 4, en coupe suivant le plan 5-5 ;

- la figure 6 est une vue partielle en coupe transversale d'une culasse d'un moteur à allumage par compression et injection directe, conforme à l'invention ;

- et la figure 7 est une vue partielle et schématique de la culasse illustrée à la figure 6, en coupe suivant le plan 7-7.

- 3 -

0187099

L'invention propose d'utiliser, pour améliorer le remplissage de moteurs dits "supercarrés", deux soupapes d'admission et une d'échappement par cylindre. Ceci est fort connu de l'homme du métier, mais la disposition et la commande de ces soupapes suivant la description ci-dessous sont particulièrement recommandées pour des moteurs de grande diffusion et par conséquent à prix de revient limité.

Amélioration du remplissage.

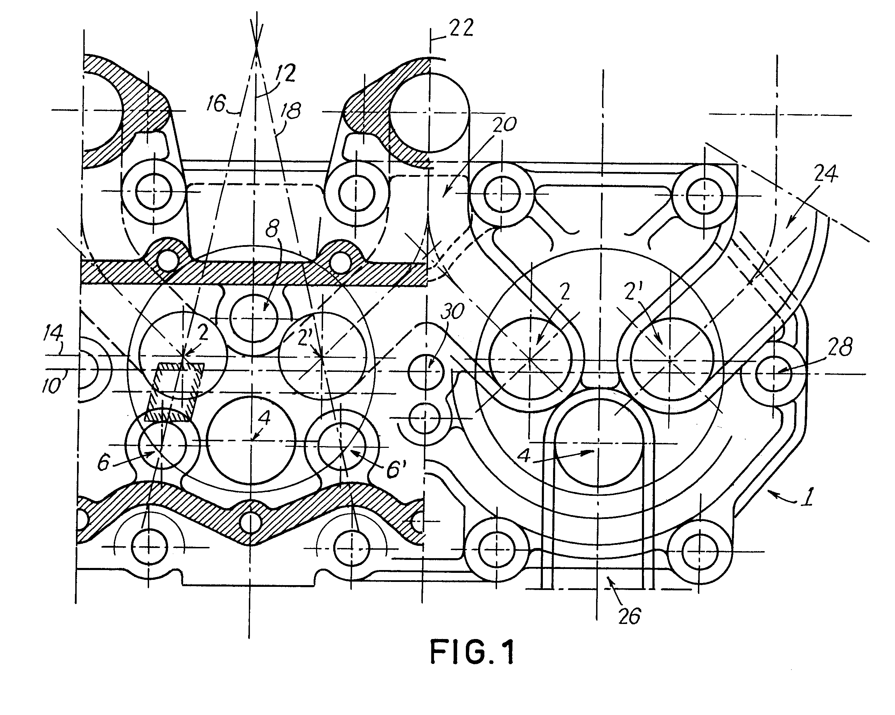

En référence à la figure 1, un seul arbre à cames non représenté commande deux soupapes d'admission 2, 2' et une soupape d'échappement 4 par cylindre, à l'intérieur de cette culasse 1.

Elles seront de ce fait perpendiculaires au plan de joint culasse/carter-cylindres, et parallèles aux axes-cylindres. Cette disposition est recommandée pour les moteurs à allumage par compression et injection indirecte ou directe, ainsi que pour les moteurs à allumage commandé et chambre de combustion du type "Héron", "partagée ou non".

Les soupapes 2, 2' et 4 sont actionnées par des linguets 6, 6' et 8 prenant appui sur des rotules hydrauliques ou non. Ceux-ci présentent une grande rigidité, offrant ainsi la possibilité d'employer des lois de mouvement de soupapes à forte accélération pour accroître le remplissage.

L'arbre à cames, pour simplifier la réalisation de la culasse, est logé dans un carter spécial non représenté, formant couvercle de culasse. Il est positionné parallèlement à l'axe du vilebrequin, au-dessus des linguets qu'il actionne, et entre les soupapes d'admission et d'échappement pour satisfaire judicieusement leur cinématique de commande.

- 4 -

0187099

Le meilleur dimensionnement relatif pour ces soupapes et pour un alésage donné, conduit à aligner les soupapes d'admission 2, 2' sur un plan 14 légèrement en retrait du plan longitudinal 10 de la rangée de cylindres du moteur et symétriquement au plan transversal 12 du cylindre correspondant, et à centrer la soupape d'échappement 4 sur ce plan transversal. Ce plan 12 est le plan axial du cylindre qui est perpendiculaire au plan longitudinal 10 du moteur.

Cet agencement assure des inter-sièges (soupapes 2, 2'/soupape 4) compatibles avec une bonne tenue du matériau de la culasse (aluminium pour les moteurs chargés).

Compte tenu de cette disposition de soupapes et de l'encombrement de leurs ressorts de rappel coaxiaux, le linguet 8 commandant la soupape d'échappement 4, et sa rotule d'appui sont centrés sur le plan transversal 12. Cette rotule d'appui se trouve donc entre les ressorts non représentés des soupapes d'admission 2, 2'.

Les deux linguets d'admission 6, 6' sont respectivement centrés sur deux plans sécants 16, 18, symétriques par rapport au plan transversal 12, et passant par les axes des soupapes respectives 2, 2'. Cette légère divergence permet la mise en place des rotules d'appui de ces linguets 6, 6' vis à vis du ressort non représenté de la soupape d'échappement 4. De plus, elle implique, afin d'éviter le basculement du linguet, l'emploi d'une came de commande dont la largeur peut assurer l'intégralité de la portée de ce linguet.

Disposition de conduits d'admission et d'échappement en fonction du positionnement des soupapes et de l'aménagement de la culasse (voir figure 1).

Les soupapes d'admission 2, 2' de deux cylindres contigus sont alimentées par un conduit en fourche 20 dont la branche commune est centrée sur un plan inter-cylindres 22. Les soupapes extrêmes des cylindres d'extrémités sont alimentées par des conduits unitaires 24 représentés chacun par une demi-fourche.

- 5 -

0187099

Cette disposition permet d'obtenir facilement, à l'aide d'un collecteur approprié, le remplissage des cylindres en mélange carburé par une ou deux soupapes. Il s'agit d'un avantage connu et fort intéressant pour des moteurs à allumage commandé soumis à des variations de charge et de régime lorsqu'ils sont utilisés pour propulser des véhicules notamment.

Chaque soupape d'échappement 4 est associé à un conduit 26 centré sur le plan transversal 12 du cylindre correspondant. Cette disposition de conduits autorise une remarquable disposition de vis 28 pour la fixation de la culasse sur le carter moteur. Chaque cylindre peut être intéressé par quatre vis circonscrites dont le pas longitudinal reste faible. Mieux, pour des moteurs à forte pression de combustion, une vis supplémentaire 30 peut être prévue à l'intersection des plans longitudinal 10 et inter-cylindres 22, ainsi qu'aux extrémités de la culasse. Le serrage de la culasse 1 est ainsi réalisé avec six vis réparties de façon sensiblement régulière autour de chaque cylindre.

La bonne tenue du joint de culasse s'obtient sans artifices ; les pièces peuvent être moins lourdes et les vis plus faiblement dimensionnées. Le joint de culasse ne nécessitant pas de resserrage, les vis inter-cylindres 30 peuvent être inaccessibles, une fois le couvercle de culasse en place.

Cet agencement s'avère particulièrement intéressant pour des moteurs qui présentent un fort entr'axes cylindres conditionné par le dimensionnement du vilebrequin (par exemple des moteurs six cylindres en V à combustions équidistantes).

Mise en place des moyens d'allumage ou d'injection dans la culasse 1.

La mise en place des soupapes 2, 2', 4 et de leur dispositif de commande précédemment décrite, présente l'avantage d'offrir une place libre importante à l'opposé de la soupape d'échappement 4 ; il est possible par conséquent, d'y installer dans les meilleures conditions, des moyens d'allumage ou d'injection suivant le type de moteur retenu.

Cette facilité d'installation offre ainsi la possibilité d'obtenir trois types de moteurs performants, avec les mêmes moyens de fabrication du gros oeuvre de la culasse et à fortiori du carter-cylindres la recevant.

En effet, la place disponible dans la culasse, entre les soupapes d'admission 2, 2' et à l'opposé de la soupape d'échappement 4, ainsi que le faible encombrement de la partie haute de la culasse 1 dans le plan médian du cylindre, privilégient la mise en place :

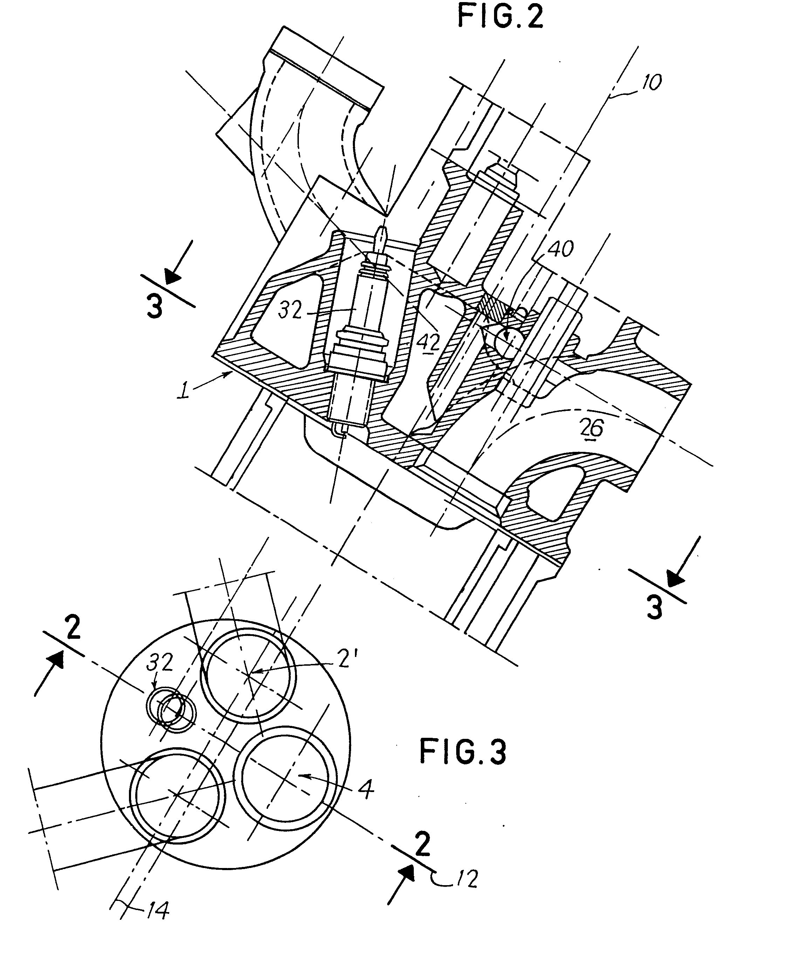

* Pour un moteur à allumage commandé et pourvu d'une culasse à chambre du type Héron (voir figures 2 et 3) :

- d'une bougie 32 qui sera particulièrement bien centrée et refroidie ; son débouché sur la face de la culasse est franc, car son inclinaison n'est limitée que par le bossage recevant la rotule d'appui du linguet de commande de la soupape d'échappement 4, en partie haute de la culasse. Les électrodes seront de ce fait disposées au mieux dans la chambre (figure 2).

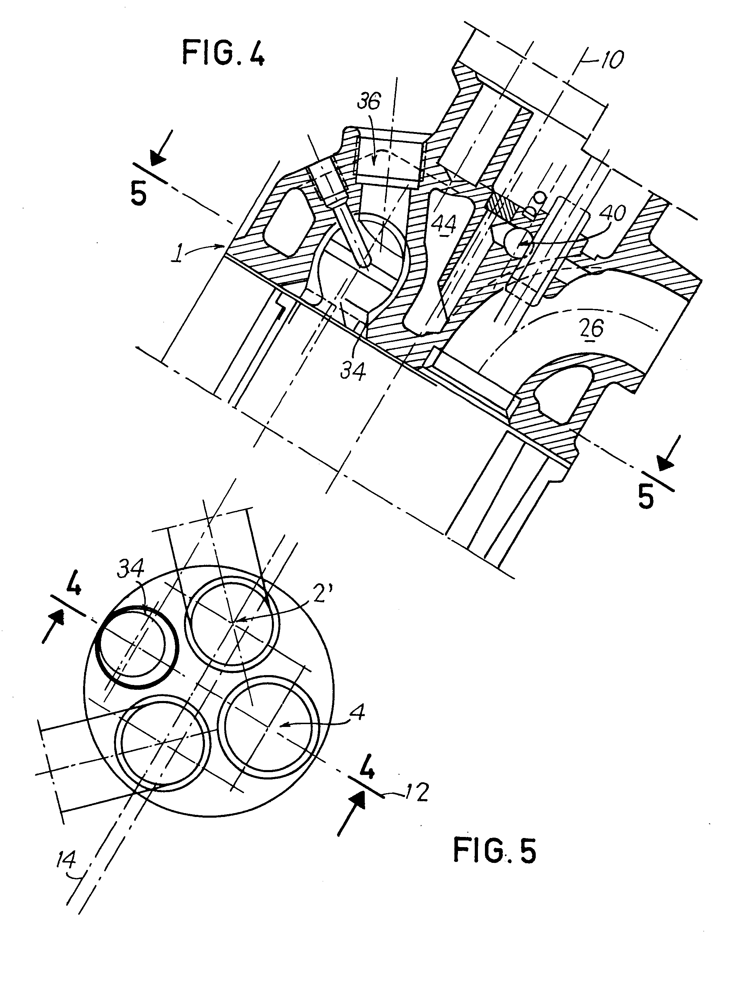

* Pour un moteur à allumage par compression et injection indirecte du type Ricardo (figures 4 et 5) :

- d'une préchambre 34 insérée à la coulée et recentrée le plus possible.

En effet, elle peut s'insérer relativement près des deux soupapes d'admission 2, 2' dites "froides", par opposition à la soupape d'échappement 4. Le "triangle" de chaleur inhérent aux culasses traditionnelles à deux soupapes, devient un "rectangle" de fortes dimensions capable d'évacuer suffisamment de calories pour assurer une température de fonctionnment compatible avec la bonne tenue du métal de la culasse. Le piston ne subira plus en sa périphérie,

- 7 -

0187099

le "coup de chalumeau" en provenance de la préchambre.

Il pourra être allégé, car le segment coup de feu sera remonté vers la face compression, entraînant la diminution du volume mort nuisible.

L'injecteur correspondant 36 bénéficiera vis à vis de la préchambre, de la meilleure inclinaison possible, comme la bougie 32 dans le cas du moteur à allumage commandé.

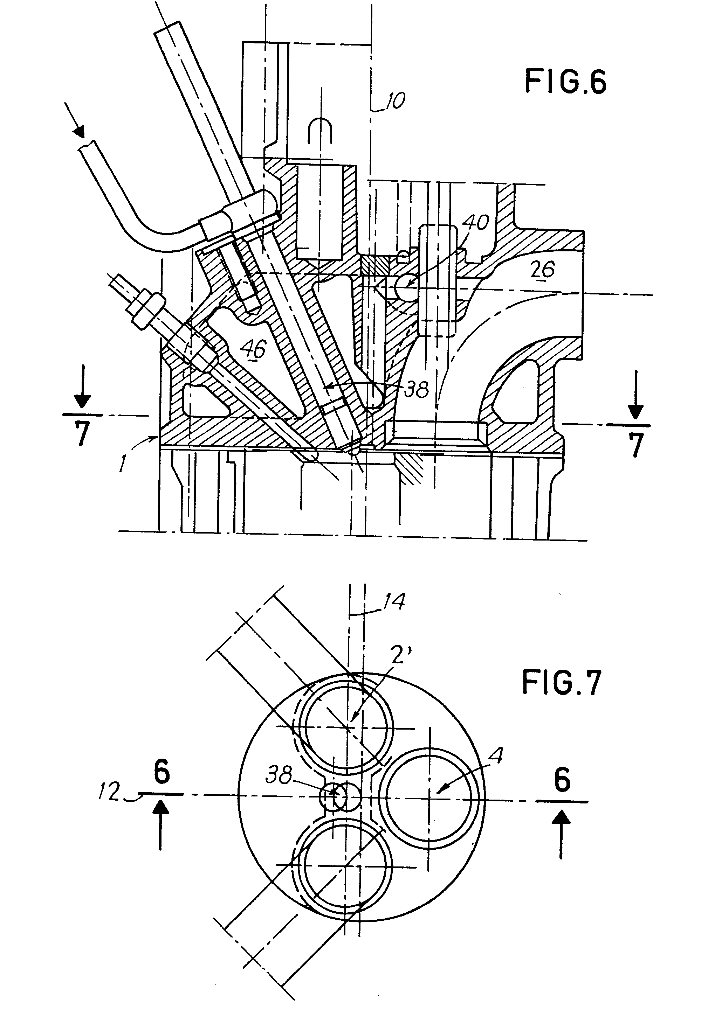

* Pour un moteur à allumage par compression et injection directe (figures 6 et 7) :

- d'un injecteur "type crayon" 38 entre les soupapes d'admission 2, 2', suffisamment écartées - vu leur dimensionnement - et froides pour le recevoir.

Celui-ci peut déboucher le plus près possible du centre de la chambre de combustion tout en conservant une inclinaison compatible avec une bonne orientation des jets. Cette inclinaison est dictée, comme pour la mise en place de la bougie 32, par la partie haute de la culasse (figure 6).

Refroidissement des moyens d'allumage ou d'injection installés dans la culasse 1.

Un mode de refroidissement, commun à ces trois types de culasse, comportera une rampe longitudinale 40 alimentée directement par le liquide circulant dans le carter-cylindres dès sa sortie sous pression de la pompe à eau.

A partir de cette rampe, des bossages percés amèneront l'eau le plus près possible de la semelle de culasse dans le puits 42, 44, 46 formé, suivant chacun des cas, :

- par le puits de bougie 32 et les pipes d'admission et d'échappement (figure 2) ;

- par le bossage recevant la préchambre 34 et les pipes d'admission et d'échappement (figure 4) ;

- par le bossage recevant l'injecteur 38 et les pipes d'admission et d'échappement (figure 6).

Ainsi, le liquide de refroidissement peut arriver sous fort débit au fond du puits correspondant au "rectangle de chaleur", et n'en ressort qu'après avoir léché toutes les parois chauffées par conduction à partir de la semelle de la culasse.

En résumé, le fait d'employer trois soupapes par cylindre (deux d'admission et une d'échappement) dans un moteur à combustion interne dit "supercarré", conjugué à l'aménagement de leur commande par linguets et l'emploi d'un seul arbre à cames, facilite la mise en place, dans de bonnes conditions, des moyens d'allumage et d'injection, tout en offrant des moyens de fabrication polyvalents. De par leur construction, les moteurs ainsi conçus sont rendus plus fiables, ce qui va de pair avec l'accroissement de leur remplissage et par conséquent de leur puissance spécifique au meilleur rendement.

## REVENDICATIONS

1. Culasse de moteur à combustion interne, du type recevant deux soupapes d'admission (2, 2') et une soupape d'échappement (4) par cylindre, actionnées par des linguets respectifs (6, 6', 8) montés sur rotules, caractérisée en ce que :

- la soupape d'échappement (4) est centrée sur le plan axial (12) du cylindre qui est perpendiculaire au plan longitudinal (10) de la rangée de cylindres du moteur, et désigné plan transversal, et les deux soupapes d'admission (2, 2') sont centrées sur un plan (14) parallèle à ce plan longitudinal, symétriquement à ce plan transversal ;

- le linguet d'échappement (8) est centré sur le plan transversal (12), et les deux linguets d'admission (6, 6') sont respectivement centrés sur deux plans sécants (16, 18) symétriques par rapport à ce plan transversal, et passant par les axes des soupapes d'admission respectives ;

- et les trois soupapes (2, 2', 4) sont commandées par un arbre à cames unique, disposé parallèlement au plan longitudinal (10) du moteur, au-dessus des linguets (6, 6', 8) qu'il actionne.

2. Culasse suivant la revendication 1, caractérisée en ce que les soupapes d'admission (2, 2') de deux cylindres contigus sont alimentées par un conduit en fourche (20) dont la branche commune est centrée sur un plan inter-cylindres (22), chaque soupape d'admission extrême par un conduit unitaire (24) en forme de demi-fourche, et chaque soupape d'échappement (4) par un conduit d'échappement (26) centré sur un plan transversal (12) du cylindre correspondant, cette disposition de conduits permettant de fixer la culasse sur le carter moteur au moyen de six vis (28, 30) réparties de façon sensiblement régulière autour de chaque cylindre.

3. Culasse d'un moteur à allumage commandé, suivant la revendication 1 ou 2, caractérisée en ce qu'une bougie (32) est centrée sur un plan transversal (12) dans la place disponible de cette culasse entre les soupapes d'admission (2, 2') et à l'opposé de la soupape d'échappement (4).

4. Culasse d'un moteur à allumage par compression et injection indirecte suivant la revendication 1 ou 2, caractérisée en ce qu'une préchambre de combustion (34) insérée à la coulée, est centrée sur un plan transversal (12) dans la place disponible de cette culasse entre les soupapes d'admission (2, 2') et à l'opposé de la soupape d'échappement.

5. Culasse d'un moteur à allumage par compression et injection directe suivant la revendication 1 ou 2, caractérisée en ce qu'un injecteur "type crayon" (38) est centré sur un plan transversal (12) dans la place disponible de cette culasse entre les soupapes d'admission (2, 2') et à l'opposé de la soupape d'échappement (4) de manière à déboucher à proximité du centre de la chambre de combustion correspondante.

6. Culasse suivant la revendication 3, caractérisée en ce qu'elle comporte une rampe longitudinale de refroidissement (40) à partir de laquelle des bossages percés amènent le liquide refroidisseur à proximité immédiate de la semelle de culasse dans un puits (42) formé par un puits de bougie (32) et les pipes d'admission (20, 24) et d'échappement (26).

7. Culasse suivant la revendication 4, caractérisée en ce qu'elle comporte une rampe longitudinale de refroidissement (40) à partir de laquelle des bossages percés amènent le liquide refroidisseur à proximité immédiate de la semelle de culasse dans un puits (44) formé par le bossage recevant la préchambre (34), et les pipes d'admission (20, 24) et d'échappement (26).

- 11 -

0187099

8. Culasse suivant la revendication 5, caractérisée en ce qu'elle comporte une rampe longitudinale de refroidissement (40) à partir de laquelle des bossages percés amènent le liquide refroidisseur à proximité immédiate de la semelle de culasse dans un puits (46) formé par le bossage recevant l'injecteur (38), et les pipes d'admission (20, 24) et d'échappement (26).

FIG.1

0187099

0187099

FIG.2

FIG.3

0187099

FIG. 4

FIG. 5

FIG.6

FIG.7

**Office européen des brevets**

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 062 143 (BMW) <br> * Page 7, ligne 17 - page 8, ligne 16 * | 1,5-8 | F 02 F 1/42 <br> F 01 L 1/26 |
| A | FR-A- 853 700 (ISOTTA FRASCHINI) <br> * Page 2 * | 2 | |
| A | US-A-1 915 237 (MOORE) <br> * Page 1, lignes 61-100 * | 1 | |
| A | FR-A-1 469 325 (LE MOTEUR MODERN) | | |

DOMAINES TECHNIQUES RECHERCHES (Int. Cl.4)

F 02 F
F 01 L

Le présent rapport de recherche a été établi pour toutes les revendications

| Lieu de la recherche <br> LA HAYE | Date d'achèvement de la recherche <br> 21-03-1986 | Examinateur <br> WASSENAAR G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82